# EUROPEAN PATENT SPECIFICATION

(11) **EP 2 955 945 B1**
(45) Date of publication and mention of the grant of the patent: **10.07.2019**
(21) Application number: 13874448.7
(22) Date of filing: 17.09.2013
(51) Int. Cl.: H04L 12/14, H04L 29/06, H04W 12/06, H04M 15/00, H04W 4/24, H04W 84/12, H04W 88/02, H04W 88/08

(54) **METHOD AND SYSTEM FOR IMPLEMENTING AUTHENTICATION AND ACCOUNTING IN INTERACTION BETWEEN WIRELESS LOCAL AREA NETWORK AND FIXED NETWORK**
VERFAHREN UND SYSTEM ZUR IMPLEMENTIERUNG VON AUTHENTIFIZIERUNG UND ABRECHNUNG BEI EINER INTERAKTION ZWISCHEN EINEM WLAN UND FESTNETZ
PROCÉDÉ ET SYSTÈME DE MISE EN OEUVRE D'AUTHENTIFICATION, D'AUTORISATION ET DE COMPTABILISATION EN INTERACTION ENTRE UN RÉSEAU LOCAL SANS FIL ET UN RÉSEAU FIXE

(30) Priority: 05.02.2013 CN 201310046354
(43) Date of publication of application: 16.12.2015
(73) Proprietor: ZTE Corporation, Shenzhen, Guangdong 518057 (CN)
(72) Inventor: YOU, Jianjie, Shenzhen Guangdong 518057 (CN); WANG, Huaibin, Shenzhen Guangdong 518057 (CN)
(74) Representative: Lavoix
(86) International application number: PCT/CN2013/083663
(87) International publication number: WO 2014/121614

(56) References cited:
- EP-A1- 2 432 265
- EP-A1- 2 533 466
- CN-A- 101 568 069
- CN-A- 102 202 001
- CN-A- 102 546 651
- US-A1- 2002 174 335
- US-A1- 2008 089 305

## Description

### Technical field

The present disclosure relates to a wireless communication technology, and in particularly, to a method and system for implementing authentication and accounting in interaction between a wireless local area network (WLAN) and a fixed network.

### Background

With gradual maturity and popularity of the WLAN access technology, as well as the demand of users for high-speed wireless access, domestic and foreign service providers are developing WLAN services vigorously. The WLAN access technology, as splitting means in 2G and 3G, plays an increasingly important role.

The WLAN access technology is a complement to fixed network access. How to effectively know and manage a WLAN access situation of a user in real time becomes the key of development for the WLAN services. Moreover, this will help service providers carry out network optimization.

A WLAN network mainly consists of User Equipment (UE), an Access Point (AP), an Access Controller (AC), a Broadband Network Gateway (BNG) and an Authentication Authorization Accounting server (AAA), wherein the AP is a bridge between a wired network and a WLAN, and the UE may access external network resources via the AP. Under the framework of interaction between a WLAN and a fixed network in the prior art, the functions of the AP, AC and BNG, AAA are not yet divided clearly, especially there is no solution about how to implement authentication and accounting on UE.

EP 2432265 A1 (HUAWEI TECH CO LTD ICNI), 21 March 2012 discloses method and apparatus for sending a key on a wireless local area network.

### Summary

In view of above, the embodiments of the present disclosure aim to provide a method and system for implementing authentication and accounting in interaction between a WLAN and a fixed network, which can realize the authentication and accounting on UE in interaction between a WLAN and a fixed network.

To achieve the above purpose, the technical solution of embodiments of the present disclosure is achieved as follows.

A method for implementing authentication and accounting in interaction between a WLAN and a fixed network is provided, as recited in claim 1.

A system for implementing authentication and accounting in interaction between a WLAN and a fixed network is provided, as recited in claim 9.

According to the method and system for implementing authentication and accounting in interaction between a WLAN and a fixed network provided by the embodiments of the present disclosure, a BNG may interact with an AAA and implement authentication and accounting on UE in turn through an AAA proxy function of an AC after the UE accesses a network, authentication and accounting on the UE accordingly can be effectively implemented under the framework of interaction between a WLAN and a fixed network.

In addition, after receiving an address request message from the UE, the BNG may assign an IP address for the UE and return the assigned IP address to the UE, in this way, address assigning can be effectively implemented for users in the framework of interaction between a WLAN and a fixed network.

### Brief description of the drawings

Fig. 1 is a schematic flowchart of a method for implementing authentication and accounting in interaction between a WLAN and a fixed network in accordance with an embodiment of the present disclosure;
Fig. 2 is a schematic diagram of a scenario of networking in accordance with embodiments of the present disclosure;
Fig. 3 is a schematic flowchart of a method for performing authentication on UE in interaction between a WLAN and a fixed network in accordance with the first embodiment of the present disclosure;
Fig. 4 is a schematic flowchart of a method for assigning an IP address and performing accounting in interaction between a WLAN and a fixed network in accordance with the second embodiment of the present disclosure;
Fig. 5 is a schematic flowchart of a method for reporting accounting information by a BNG in interaction between a WLAN and a fixed network in accordance with the third embodiment of the present disclosure;
Fig. 6 is a schematic flowchart of a method for terminating the accounting in interaction between a WLAN and a fixed network in accordance with the fourth embodiment of the present disclosure; and
Fig. 7 is a schematic structure diagram of a system for implementing authentication and accounting in interaction between a WLAN and a fixed network in accordance with an embodiment of the present disclosure.

### Detailed description

In the embodiments of the present disclosure, after UE accesses a network, a BNG interacts with an AAA and implements authentication and accounting on the UE in turn through an AAA proxy function of an AC.

The present disclosure is described in further detail below by specific embodiments in conjunction with the accompanying drawings.

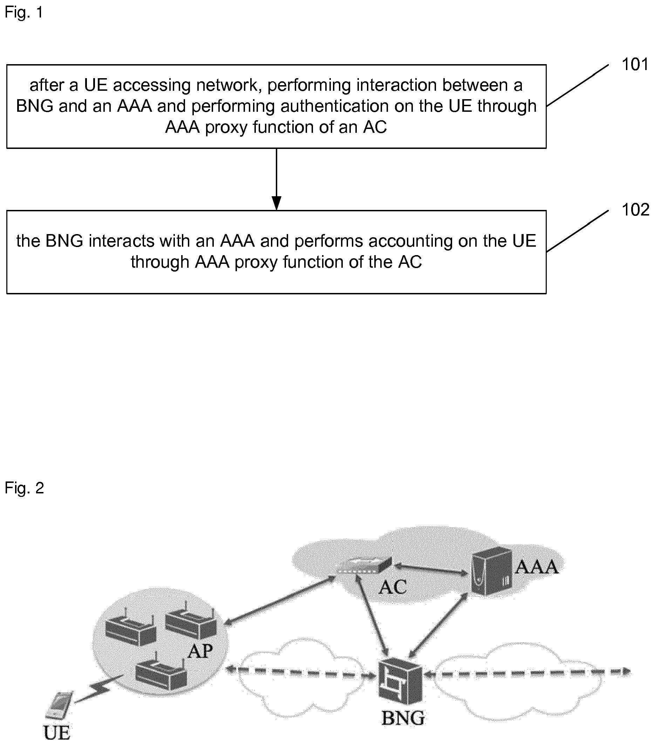

In an embodiment of the present disclosure, as shown in Fig. 1, a method for implementing authentication and accounting in interaction between a WLAN and a fixed network may include following steps.

Step 101 includes that after UE accesses a network, a BNG interacts with an AAA and implements authentication on the UE through an AAA proxy function of an AC;
wherein, this step may include:
the BNG sends an authentication request message received from the UE to the AAA through the AAA proxy function of the AC;
the AAA authenticates the UE according to the authentication request message.

In addition, the step of the BNG sending an authentication request message received from the UE to the AAA through the AAA proxy function of the AC may specifically include that:
the BNG sends the authentication request message received from the UE to the AAA based on an AAA protocol;
after receiving the authentication request message, the AC sends the authentication request message to the AAA based on the AAA protocol.

Further, the AAA protocol may be a RADIUS protocol, etc.

After success of the authentication, the method may further include that:
the AAA replies an authentication success message to the AC based on the AAA protocol;
the AC sends a key of the UE, which is contained in the received authentication success message and used to inform the AP that the authentication on the UE is successful, to the AP, and replies an authentication success message to the BNG based on the AAA protocol;
after receiving the key of the UE, the AP negotiates a new key with the UE;
after receiving the authentication success message, the BNG stores user information of the UE and replies an authentication success message to the UE.

Further, the step of the AC sending the AP a key of the UE contained in the received authentication success message and used to inform the AP that the authentication on the UE is successful may specifically include that:
the AC sends the key of the UE contained in the received authentication success message and used to inform the AP that the authentication on the UE is successful to the AP through a CAPWAP tunnel established between the AC and the AP.

The new key is for encrypting data transmitted by the UE.

Step 102 includes that the BNG interacts with the AAA and implements accounting on the UE through the AAA proxy function of the AC.

Specifically, after assigning an IP address for the UE, the BNG sends an accounting start message to the AC based on the AAA protocol;
after receiving the accounting start message, the AC as an AAA proxy forwards the accounting start message to the AAA based on the AAA protocol;
after receiving the accounting start message, the AAA performs accounting on the UE.

In addition, the method may further include that:
after receiving an address request message from the UE, the BNG assigns the IP address for the UE and returns the assigned IP address to the UE.

Here, before assigning the IP address for the UE, the method may further include that:
the BNG determines whether the UE passes the authentication according to a user identity in the address request message, and if the UE passes the, assigns the IP address for the UE.

Specifically, the user identity may be a medium access control (MAC) address, etc.

During the accounting, the method may further include that:
the BNG reports collected accounting information of the UE to the AC based on the AAA protocol;
the AC as the AAA proxy forwards the received accounting information of the UE to the AAA based on the AAA protocol;
the AAA makes accounting-related statistic according to the received accounting information of the UE.

Additionally, the accounting information may include traffic information of the UE; and further, the accounting information may include duration information of the UE, etc.

After the AC receives the accounting information of the UE, the method may further include that:
the AC makes a user policy according to the accounting information of the UE when the user policy is needed to be made, and sends the user policy to the AP for execution;
here, the step of sending the user policy to the AP for execution may include that:
   the AC sends the user policy through the CAPWAP tunnel established between the AC and the AP to the AP for execution.

The method may further include that:
the AC sends a user offline notification message to the BNG when the accounting is needed to be terminated;
after receiving the user offline notification message, the BNG sends an accounting termination message to the AC based on the AAA protocol;
after receiving the accounting termination message, the AC as an AAA proxy forwards the accounting termination message to the AAA based on the AAA protocol;
after receiving the accounting termination message, the AAA terminates the accounting on the UE.

Here, the timing when the accounting is needed to be terminated may be a moment when an offline notification about the UE is received, or the moment when the UE is detected to go offline, or the moment when the UE is detected to meet an offline condition.

Here, detecting that the UE meets an offline condition may include:
detecting that data about traffic and/or duration used by the UE has reached the upper limit subscribed by of the UE.

The user offline notification message may carry the user identity of the UE.

The present disclosure is described in further detail below in conjunction with the embodiments.

Fig.2 shows a scenario of networking in accordance with the first to fourth embodiments. In this scenario, UE is a 802.1X client; the UE accesses a wired network via an AP, and the AP has a capability to distinguish between 802.11 datagrams and 802.11 management/control messages; an AC is responsible for managing the AP and sending configuration parameters to the AP through a CAPWAP tunnel, while the AC is a RADIUS proxy; a BNG acts as a 802.1X authenticator and a RADIUS client; and an AAA is a RADIUS server. In Fig. 2, the solid line represents transmission direction of signalling streams, i.e., the transmission of signalling streams among the AAA, AC, AP and BNG; the dotted line represents the transmission direction of data streams, i.e., the transmission of data streams between the BNG and AP. In another words, datagrams from UE are sent to the BNG via the AP, and then sent to the network via the BNG; correspondingly, datagrams from the network are sent to the AP via the BNG, and then sent to the UE via the AP.

It is noted that, the interaction between the UE and the BNG in the first and second embodiments is implemented by direct forwarding via the AP.

### First embodiment

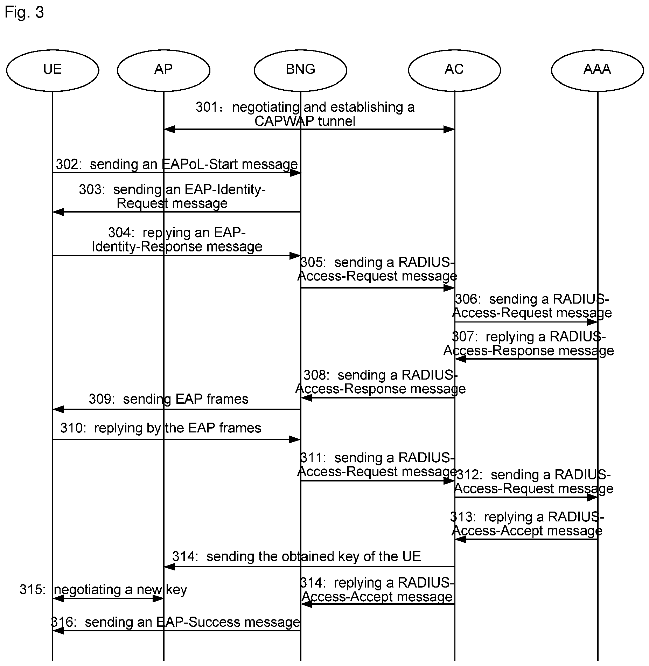

The application scenario of the present embodiment is an authentication process after UE is attached to a network; as shown in Fig. 3, in the present embodiment, a method for authenticating UE in interaction between a WLAN and a fixed network may include following steps.
Step 301 includes that after the UE is attached to the network, an AP negotiates with an AC and establishes a CAPWAP tunnel with the AC;
   here, the AP has a capability to distinguish between 802.11 datagrams and 802.11 management/control messages transmitted by the UE.
   The CAPWAP tunnel may be used to transmit 802.11 management/control messages, for example, to transmit a key that is used to inform the AP that the authentication on the UE is successful, etc.
Step 302 includes that the UE sends an authentication start (EAPoL-Start) message to the BNG for starting 802.1X authentication access.
Step 303 includes that after receiving the EAPoL-Start message, the BNG sends an identity request (EAP-Identity-Request) message to the UE for asking the UE to report its user identity.
Step 304 includes that after receiving the EAPoL-Start message, the UE replies an identity response (EAP-Identity-Response) message to the BNG;
   here, the EAP-Identity-Response message may include the user identity.
Step 305 includes that after receiving the EAP-Identity-Response message, the BNG encapsulates an EAP frame into an authentication request (RADIUS-Access-Request) message and sends it to the AC based on a RADIUS protocol;
   here, the BNG is an 802.1X authenticator and an AAA client.
   The AC is a RADIUS proxy.
Step 306 includes that after receiving the RADIUS-Access-Request message, the AC sends the RADIUS-Access-Request message to an AAA server based on the RADIUS protocol;
   here, the AAA protocol may specifically be a RADIUS protocol, etc.
Step 307 includes that after receiving the RADIUS-Access-Request message, the AAA replies an authentication request response (RADIUS-Access-Response) message to the AC based on RADIUS protocol;
   here, the RADIUS-Access-Response message may include an Extensible Authentication Protocol (EAP) Challenge.
Step 308 includes that after receiving the RADIUS-Access-Response message, the AC sends the received RADIUS-Access-Response message to the BNG based on RADIUS protocol;
   here, the RADIUS-Access-Response message sent to the BNG may include the EAP Challenge.
Step 309-310 include that after receiving the RADIUS-Access-Response message, the BNG decapsulates the message to obtain the EAP frame and send EAP frame to the UE; and after receiving the EAP frame, the UE replies to the BNG by the EAP frame;
   here, the replied EAP frame may include a challenged password.
Step 311 includes that after receiving the EAP frame, the BNG encapsulates the received EAP frame into a RADIUS-Access-Request message and sends the RADIUS-Access-Request message to the AC based on the RADIUS protocol;
   here, the RADIUS-Access-Request message may include the challenged password.
Step 312 includes that after receiving the RADIUS-Access-Request message, the AC sends the RADIUS-Access-Request message to the AAA server based on the RADIUS protocol.
Step 313 includes that after receiving the RADIUS-Access-Request message, the AAA performs an authentication, and if the authentication is successful, the AAA replies a RADIUS-Access-Accept message to the AC based on the RADIUS protocol;
   here, the methods known in the prior art may be used to perform the authentication.
   The RADIUS-Access-Accept message may carry at least a key of the UE.
Step 314 includes that after receiving the RADIUS-Access-Accept message, the AC obtains the key of the UE from the received RADIUS-Access-Accept message, sends the obtained key of the UE to the AP through the CAPWAP tunnel and then replies the RADIUS-Access-Accept message to the BNG based on the RADIUS protocol;
   here, the obtained key of the UE may be used to inform the AP that the UE has past the authentication.
Step 315 includes that after receiving the key, the AP negotiates a new key with the UE;
   here, the new key may be for encrypting data transmitted by the UE.
Step 316 includes that after receiving the RADIUS-Access-Accept message, the BNG stores user information of the UE and replies an EAP-Success message to the UE.

Here, the user information may include a user identity, such as a MAC address, a user name, etc.

It should be noted that as a RADIUS proxy, the AC can be aware of the authentication on the UE in the entire process of the authentication.

Then, the authentication is completed.

### Second embodiment

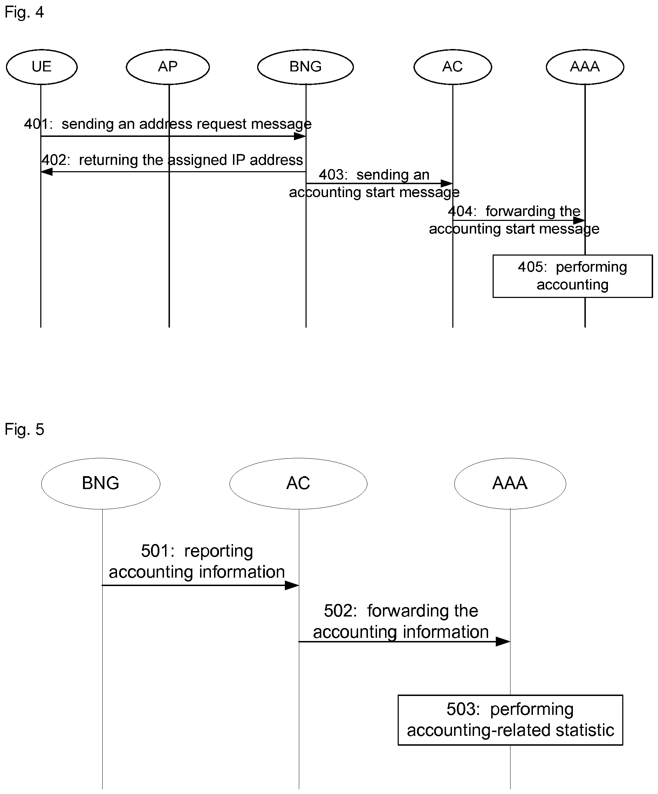

The application scenario of the present embodiment is that after the completion of flow in the first embodiment, i.e., after success of the authentication, an IP address is needed to be assigned for the UE and accounting is needed to be performed on the UE. In the present embodiment, as shown in Fig. 4, a method for assigning an IP address and performing accounting in interaction between a WLAN and a fixed network may include following steps.

Step 401 includes that after success of the authentication, the UE sends a DHCPv4/v6 address request message to the BNG;
here, the DHCPv4/v6 address request message may include a user identity, such as a MAC address.

Step 402 includes that after receiving the DHCPv4/v6 address request message, the BNG assigns an IP address for the UE and returns the assigned IP address to the UE;
here, before the IP address is assigned for the UE, the method may further include that:
the BNG determines whether the UE passes the authentication according to the user identity in the DHCPv4/v6 address request message, and if the UE passes the authentication, assigns the IP address for the UE.

Further, the BNG has stored the user identity of the UE in advance, and when determining whether the UE passes the authentication, compares the stored user identity of the UE with the user identity in the DHCPv4/v6 address request message, if both the user identities are the same, determines that the UE passes the authentication, otherwise, determines that the UE does not pass the authentication.

The user identity may specifically be a MAC address, etc.

If the BNG determines that the UE does not pass the authentication, then an IP address is not assigned for the UE, and correspondingly, the BNG may return an assignation failure message to the UE.

Here, the methods known in the prior art may be used to assign an IP address for the UE.

Step 403 includes that the BNG sends an accounting start message to the AC based on the RADIUS protocol.

Step 404 includes that after receiving the accounting start message, the AC as a RADIUS proxy forwards the accounting start message to the AAA based on the RADIUS protocol.

Step 405 includes that after receiving the accounting start message, the AAA performs accounting on the UE.

### Third embodiment

The application scenario of the present embodiment is that after the completion of the flow in the second embodiment, the BNG reports accounting information during the accounting. In the present embodiment, as shown in Fig. 5, a method for reporting accounting information by the BNG in interaction between a WLAN and a fixed network may include following steps.
Step 501 includes that the BNG collects accounting information of the UE and reports the collected accounting information of the UE to the AC based on the RADIUS protocol;
   here, the methods known in the prior art may be used to implement this step.
   The accounting information of the UE may include information about traffic, duration of the UE, etc.
Step 502 includes that after receiving the accounting information, the AC as a RADIUS proxy forwards the accounting information of the UE to the AAA based on RADIUS protocol;
   here, the method may further include that:
   the AC makes a user policy according to the accounting information of the UE when the user policy is needed to be made, and sends the user policy to the AP for execution.
   The user policy may be made when the traffic used by the user is close to a threshold; that is to say, a user policy is made according to the accounting information of the UE reported by the BNG only when a user policy is needed to be made, instead of making a user policy whenever the accounting information of the UE reported by the BNG is received.
   The AC sends the user policy to the AP through the established CAPWAP tunnel for execution.
Step 503 includes that after receiving the accounting information, the AAA makes accounting-related statistic according to the received accounting information of the UE.

### Fourth embodiment

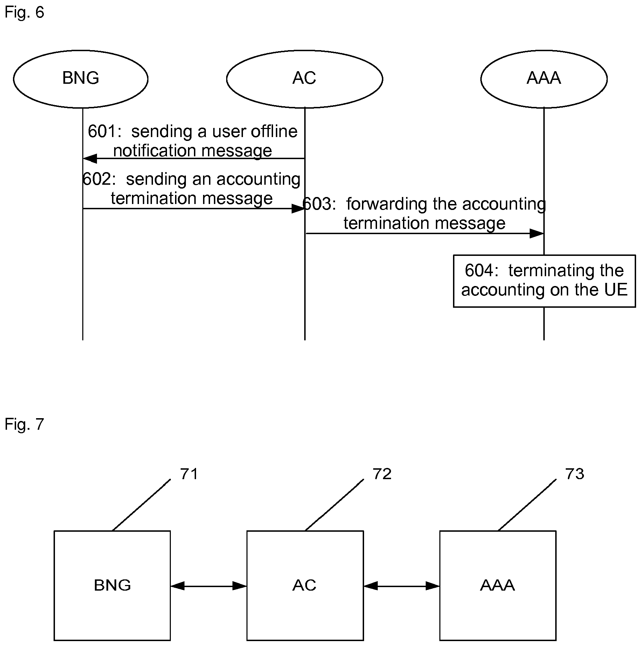

The application scenario of the present embodiment is a process where the accounting is terminated based on the second and third embodiments. In the present embodiment, as shown in Fig. 6, a method for terminating accounting in interaction between a WLAN and a fixed network may include following steps.
Step 601 includes that the AC sends a user offline notification message to the BNG when the accounting is needed to be terminated;
   here, the accounting is needed to be terminated when an offline notification about the UE is received, or when the UE is detected to go offline, or when the UE is detected to meet an offline condition;
   wherein, detecting that the UE meets an offline condition may include:
   detecting that the data about traffic and/or duration used by the UE has reached the upper limit subscribed by of the UE.
   The user offline notification message may carry a user identity of the UE, such as an IP address, a MAC address, etc.
Step 602 includes that after receiving the user offline notification message, the BNG sends an accounting termination message to the AC based on the RADIUS protocol.
Step 603 includes that after receiving the accounting termination message, the AC as a RADIUS proxy forwards the accounting termination message to the AAA based on the RADIUS protocol;
Step 604 includes that after receiving the accounting termination message, the AAA terminates the accounting on the UE.

In order to achieve the above methods, an embodiment of the present disclosure further provides a system for implementing authentication and accounting in interaction between a WLAN and a fixed network. As shown in Fig. 7, the system includes a BNG 71, an AC 72 and an AAA 73; wherein,
the BNG 71 is configured to, after UE accesses a network, interact with the AAA 73 and implement authentication and accounting on the UE in turn through an AAA proxy function of the AC 72.

Further, the system may include an AP and the UE; wherein,
the AAA 73 is configured to, after success of the authentication, reply an authentication success message to the AC 72 based on an AAA protocol;
the AC 72 is configured to, after receiving the authentication success message replied by the AAA 73, send the AP a key of the UE contained in the received authentication success message and used to inform the AP that the authentication on the UE is successful, and reply an authentication success message to the BNG 71 based on the AAA protocol;
the AP is configured to, after receiving from the AC 72 the key of the UE that is used to inform the AP that the authentication on the UE is successful, negotiate a new key with the UE;
the BNG 71 is further configured to, after receiving the authentication success message replied by the AC 72, store user information of the UE and reply an authentication success message to the UE;
the UE is configured to negotiate the new key with the AP, and receive the authentication success message replied by the BNG 71.

Before the BNG 71 interacts with the AAA 73 and implements the accounting on the UE through the AAA proxy function of the AC 72, the UE is further configured to send an address request message to the BNG 71 and receive an assigned IP address returned by the BNG 71;
the BNG 71 is further configured to, after receiving the address request message from the UE, assign an IP address for the UE and return the assigned IP address to the UE.

Before assigning the IP address for the UE, the BNG 71 is further configured to determine whether the UE passes the authentication according to a user identity in the address request message, and if the UE passes the authentication, assign the IP address for the UE.

During the accounting, the BNG 71 is further configured to report the collected accounting information of the UE to the AC 72 based on the AAA protocol;
the AC 72 is further configured to, after receiving the accounting information of the UE reported by the BNG 71, serve as the AAA proxy and forward the received accounting information of the UE to the AAA 73 based on the AAA protocol;
the AAA 73 is further configured to, after receiving the accounting information of the UE forwarded by the AC, make accounting-related statistic according to the received accounting information of the UE.

The AC 72 is further configured to make a user policy according to the accounting information of the UE when the user policy is needed to be made, and send the user policy to the AP for execution.

The AC 72 is further configured to send a user offline notification message to the BNG 71 when the accounting is needed to be terminated; and configured to, after receiving an accounting termination message from the BNG 71, serve as an AAA proxy, and forward the accounting termination message to the AAA 73 based on the AAA protocol;
the BNG 71 is further configured to, after receiving the user offline notification message from the AC 72, send the accounting termination message to the AC 72 based on the AAA protocol; and
the AAA 73 is further configured to, after receiving the accounting termination message forwarded by the AC 72, terminate the accounting on the UE.

The above are only the preferred embodiments of the present disclosure, and are not intended to limit the protection scope of the present disclosure.

## Claims

1. A method for implementing authentication and accounting in interaction between a wireless local area network, WLAN, and a fixed network, wherein:
after user equipment, UE, accesses a network, performing (101), by a broadband network gateway, BNG, interaction with an authentication authorization accounting server, AAA, and implementing (102) authentication and accounting on the UE in turn through an AAA proxy function of an access controller, AC;
wherein performing interaction between the BNG and the AAA and implementing authentication on the UE through the AAA proxy function of the AC comprises:
sending, by the BNG, an authentication request message received from the UE to the AC based on an AAA protocol;
sending, by the AC, the authentication request message to the AAA based on the AAA protocol after the AC receives the authentication request message; and
authenticating, by the AAA, the UE according to the authentication request message;
after the authentication succeeds, the method further comprising:
replying, by the AAA, an authentication success message to the AC based on the AAA protocol;
sending, by the AC to an access point, AP, a key of the UE contained in the received authentication success message and used to inform the AP that the authentication on the UE is successful, and replying, by the AC, an authentication success message to the BNG based on the AAA protocol;
negotiating, by the AP, a new key with the UE after receiving the key of the UE; and
storing, by the BNG, user information of the UE after receiving the authentication success message; and
replying, by the BNG, an authentication success message to the UE;
wherein the new key is for encrypting data transmitted by the UE.

2. The method according to claim 1, wherein sending, by the AC, to the AP the key of the UE contained in the received authentication success message and used to inform the AP that the authentication on the UE is successful comprises:
sending, by the AC, the key of the UE contained in the received authentication success message and used to inform the AP that the authentication on the UE is successful to the AP through a control and provisioning of wireless access points protocol, CAPWAP, tunnel established between the AC and the AP.

3. The method according to any one of claims 1 or 2, wherein performing, by the BNG, interaction with the AAA server and implementing accounting on the UE through the AAA proxy function of the AC comprises:
sending, by the BNG, an accounting start message to the AC based on an AAA protocol after assigning an Internet protocol, IP, address for the UE;
forwarding, by the AC as an AAA proxy, the accounting start message to the AAA based on the AAA protocol after receiving the accounting start message; and
implementing, by the AAA, accounting on the UE after receiving the accounting start message.

4. The method according to claim 3, during the accounting, the method further comprising:
reporting, by the BNG, accounting information of the UE collected by the BNG to the AC based on the AAA protocol;
forwarding, by the AC as the AAA proxy, the received accounting information of the UE to the AAA based on the AAA protocol; and
making, by the AAA, accounting-related statistic according to the received accounting information of the UE;
wherein after the AC receives the accounting information of the UE, the method further comprises:
making, by the AC, a user policy according to the accounting information of the UE when the user policy is needed to be made, and sending the user policy to the AP for execution.

5. The method according to claim 4, wherein the accounting information comprises traffic information of the UE and further comprises duration information of the UE.

6. The method according to claim 4, wherein sending the user policy to the AP for execution comprises:
sending, by the AC, the user policy to the AP through a CAPWAP tunnel established between the AC and the AP for execution.

7. The method according to claim 3, further comprising:
sending, by the AC, a user offline notification message to the BNG when the accounting is needed to be terminated;
sending, by the BNG, an accounting termination message to the AC based on the AAA protocol after receiving the user offline notification message;
forwarding, by the AC as an AAA proxy, the accounting termination message to the AAA based on the AAA protocol after receiving the accounting termination message; and
terminating, by the AAA, the accounting on the UE after receiving the accounting termination message.

8. The method according to claim 7, wherein the accounting is needed to be terminated when an offline notification about the UE is received, or when the UE is detected to go offline, or when the UE is detected to meet an offline condition;
wherein detecting that the UE meets the offline condition comprises:
detecting that data about traffic and/or duration used by the UE has reached an upper limit subscribed by the UE.

9. A system for implementing authentication and accounting in interaction between a wireless local area network, WLAN, and a fixed network, comprising a broadband network gateway, BNG (71), an access controller, AC (72), and an authentication authorization accounting server, AAA (73); wherein,
the BNG (71) is configured to interact with the AAA (73) and implement authentication and accounting on a User Equipment, UE in turn through an AAA proxy function of the AC after the UE, accesses a network; further comprising an access point, AP, and the UE; wherein,
the AAA (73) is configured to, after success of the authentication, reply an authentication success message to the AC based on an AAA protocol;
the AC (72) is configured to, after receiving the authentication success message replied by the AAA, send the AP a key of the UE contained in the received authentication success message and used to inform the AP that the authentication on the UE is successful, and reply an authentication success message to the BNG based on the AAA protocol;
the AP is configured to, after receiving from the AC the key of the UE that is used to inform the AP that the authentication on the UE is successful, negotiate a new key with the UE;
the BNG (71) is further configured to, after receiving the authentication success message replied by the AC, store user information of the UE and reply an authentication success message to the UE; and
the UE is configured to negotiate the new key with the AP, and receive the authentication success message replied by the BNG;
wherein the new key is for encrypting data transmitted by the UE.

10. The system according to claim 9, wherein before the BNG interacts with the AAA and implements the accounting on the UE through the AAA proxy function of the AC, the UE is further configured to send an address request message to the BNG and receive an IP address assigned and returned by the BNG; and
the BNG is further configured to, after receiving the address request message from the UE, assign the IP address for the UE and return the assigned IP address to the UE.

11. The system according to claim 10, wherein before assigning the IP address for the UE, the BNG (71) is further configured to determine whether the UE passes the authentication according to a user identity in the address request message, and assign the IP address to the UE when determining that the UE passes the authentication.

12. The system according to any one of claims 9 to 11, wherein during the accounting, the BNG is further configured to report collected accounting information of the UE to the AC based on the AAA protocol; the AC (72) is further configured to, after receiving the accounting information of the UE reported by the BNG, serve as an AAA proxy and forward the received accounting information of the UE to the AAA based on the AAA protocol; and
the AAA (73) is further configured to, after receiving the accounting information of the UE forwarded by the AC, make accounting-related statistic according to the received accounting information of the UE;
wherein the AC (72) is further configured to make a user policy according to the accounting information of the UE when the user policy is needed to be made, and send the user policy to the AP for execution.

13. The system according to any one of claims 9 to 11, wherein the AC is further configured to send a user offline notification message to the BNG when the accounting is needed to be terminated, and after receiving an accounting termination message from the BNG, serve as an AAA proxy and forward the accounting termination message to the AAA based on the AAA protocol;
the BNG (71) is further configured to, after receiving the user offline notification message from the AC, send the accounting termination message to the AC based on the AAA protocol; and
the AAA (73) is further configured to, after receiving the accounting termination message forwarded by the AC, terminate the accounting on the UE.

## Patentansprüche

1. Verfahren zum Umsetzen von Authentifizierung und Abrechnung in der Interaktion zwischen einem lokalen Funknetz (WLAN) und einem Festnetz, wobei:
nach dem Zugang einer Benutzerausrüstung, UE, zu einem Netz eine Interaktion mit einem Authentifizierungsautorisierungsabrechnungs-Server, AAA, durch ein Breitbandnetz-Gateway, BNG, durchgeführt wird (101) und Authentifizierung und Abrechnung auf der UE durch eine AAA-Proxy-Funktion eines Zugangscontrollers, AC, der Reihe nach umgesetzt werden (102),
wobei das Durchführen der Interaktion zwischen dem BNG und dem AAA und das Umsetzen der Authentifizierung auf der UE durch die AAA-Proxy-Funktion des AC Folgendes umfasst:
Senden einer Authentifizierungsanfragenachricht, die von der UE empfangen wird, durch das BNG an den AC, basierend auf einem AAA-Protokoll,
Senden der Authentifizierungsanfragenachricht an den AAA durch den AC, basierend auf dem AAA-Protokoll, nachdem der AC die Authentifizierungsanfragenachricht empfangen hat, und
Authentifizieren der UE gemäß der Authentifizierungsanfragenachricht durch den AAA,
wobei das Verfahren nach erfolgreicher Authentifizierung ferner Folgendes umfasst:
Antworten mit einer Authentifizierungserfolgsnachricht durch den AAA an den AC, basierend auf dem AAA-Protokoll,
Senden eines Schlüssels der UE, der in der empfangenen Authentifizierungserfolgsnachricht enthalten ist und verwendet wird, um einen Zugangspunkt, AP, zu informieren, dass die Authentifizierung an der UE erfolgreich war, durch den AC an den AP und Antworten mit einer Authentifizierungserfolgsnachricht an das BNG durch den AC, basierend auf dem AAA-Protokoll,
Aushandeln eines neuen Schlüssels mit der UE durch den AP nach dem Empfang des Schlüssels der UE und
Speichern von Benutzerinformationen der UE durch das BNG nach dem Empfang der Authentifizierungserfolgsnachricht und
Antworten mit einer Authentifizierungserfolgsnachricht an die UE durch das BNG,
wobei der neue Schlüssel für das Verschlüsseln von Daten vorgesehen ist, die durch die UE übertragen werden.

2. Verfahren nach Anspruch 1, wobei das Senden des Schlüssels der UE, der in der empfangenen Authentifizierungserfolgsnachricht enthalten ist und verwendet wird, um den AP zu informieren, dass die Authentifizierung an der UE erfolgreich war, durch den AC an den AP Folgendes umfasst:
Senden des Schlüssels der UE, der in der empfangenen Authentifizierungserfolgsnachricht enthalten ist und verwendet wird, um den AP zu informieren, dass die Authentifizierung an der UE erfolgreich war, durch den AC an den AP durch einen CAPWAP-Tunnel, Control And Provisioning of Wireless Access Points Protocol, der zwischen dem AC und dem AP eingerichtet ist.

3. Verfahren nach Anspruch 1 oder 2, wobei das Durchführen der Interaktion mit dem AAA-Server durch das BNG und das Umsetzen von Abrechnung auf der UE durch die AAA-Proxy-Funktion des AC Folgendes umfasst:
Senden einer Abrechnungsbeginnnachricht durch das BNG an den AC, basierend auf einem AAA-Protokoll, nach dem Zuweisen einer IP-Adresse für die UE,
Weiterleiten der Abrechnungsbeginnnachricht durch den AC als ein AAA-Proxy an den AAA, basierend auf dem AAA-Protokoll, nach dem Empfang der Abrechnungsbeginnnachricht und
Umsetzen der Abrechnung auf der UE nach dem Empfang der Abrechnungsbeginnnachricht durch den AAA.

4. Verfahren nach Anspruch 3, wobei das Verfahren während der Abrechnung ferner Folgendes umfasst:
Melden von Abrechnungsinformationen der UE, die durch das BNG gesammelt wurden, durch das BNG an den AC, basierend auf dem AAA-Protokoll, Weiterleiten der empfangenen Abrechnungsinformationen der UE durch den AC als ein AAA-Proxy an den AAA, basierend auf dem AAA-Protokoll, und
Erstellen einer abrechnungsbezogenen Statistik gemäß den empfangenen Abrechnungsinformationen der UE durch den AAA,
wobei das Verfahren nach dem Empfang der Abrechnungsinformationen der UE durch den AC ferner Folgendes umfasst:
Erstellen einer Benutzerstrategie gemäß den empfangenen Abrechnungsinformationen der UE durch den AC, wenn die Benutzerstrategie erstellt werden muss, und Senden der Benutzerstrategie an den AP zwecks Ausführung.

5. Verfahren nach Anspruch 4, wobei die Abrechnungsinformationen Verkehrsinformationen der UE und ferner Dauerinformationen der UE umfassen.

6. Verfahren nach Anspruch 4, wobei das Senden der Benutzerstrategie an den AP zwecks Ausführung Folgendes umfasst:
Senden der Benutzerstrategie durch den AC zwecks Ausführung an den AP durch einen CAPWAP-Tunnel, der zwischen dem AC und dem AP eingerichtet ist.

7. Verfahren nach Anspruch 3, ferner Folgendes umfassend:
Senden einer Benutzer-Offline-Mitteilungsnachricht durch den AC an das BNG, wenn die Abrechnung beendet werden muss,
Senden einer Abrechnungsbeendigungsnachricht durch das BNG an den AC, basierend auf dem AAA-Protokoll, nach dem Empfang der Benutzer-Offline-Mitteilungsnachricht,
Weiterleiten der Abrechnungsbeendigungsnachricht durch den AC als ein AAA-Proxy an den AAA, basierend auf dem AAA-Protokoll, nach dem Empfang der Abrechnungsbeendigungsnachricht und
Beenden der Abrechnung auf der UE durch den AAA nach dem Empfang der Abrechnungsbeendigungsnachricht.

8. Verfahren nach Anspruch 7, wobei das Abrechnen beendet werden muss, wenn eine Offline-Mitteilung über die UE empfangen wird oder wenn erkannt wird, dass die UE offline geht, oder wenn erkannt wird, dass die UE eine Offline-Bedingung erfüllt,
wobei das Erkennen, dass die UE die Offline-Bedingung erfüllt, Folgendes umfasst:
Erkennen, dass Daten über Verkehr und/oder Dauer, die durch die UE verwendet werden, eine durch die UE abonnierten Obergrenze erreicht haben.

9. System zum Umsetzen von Authentifizierung und Abrechnung in der Interaktion zwischen einem lokalen Funknetz, WLAN und einem Festnetz, ein Breitbandnetz-Gateway, BNG (71), einen Zugangscontroller, AC, (72) und einen Authentifizierungsautorisierungsabrechnungs-Server, AAA (73) umfassend, wobei das BNG (71) dafür konfiguriert ist, mit dem AAA (73) zu interagieren und nach dem Zugang einer Benutzerausrüstung, UE, zu einem Netz Authentifizierung und Abrechnung auf der UE der Reihe nach durch eine AAA-Proxy-Funktion des AC umzusetzen,
ferner einen Zugangspunkt, AP, und die UE umfassend, wobei:
der AAA (73) dafür konfiguriert ist, nach erfolgreicher Authentifizierung basierend auf einem AAA-Protokoll mit einer Authentifizierungserfolgsnachricht an den AC zu antworten,
der AC (72) dafür konfiguriert ist, nach dem Empfang der Antwort durch den AAA mit der Authentifizierungserfolgsnachricht dem AP einen Schlüssel der UE zu senden, der in der empfangenen Authentifizierungserfolgsnachricht enthalten ist und verwendet wird, um den AP zu informieren, dass die Authentifizierung an der UE erfolgreich war, und basierend auf dem AAA-Protokoll mit einer Authentifizierungserfolgsnachricht an das BNG zu antworten,
der AP dafür konfiguriert ist, nach dem Empfang des Schlüssels der UE, der verwendet wird, um den AP zu informieren, dass die Authentifizierung an der UE erfolgreich war, von dem AC einen neuen Schlüssel mit der UE auszuhandeln,
das BNG (71) ferner dafür konfiguriert ist, nach dem Empfang der Antwort des AC mit der Authentifizierungserfolgsnachricht Benutzerinformationen der UE zu speichern und mit einer Authentifizierungserfolgsnachricht an die UE zu antworten, und
die UE dafür konfiguriert ist, den neuen Schlüssel mit dem AP auszuhandeln und die Antwort des BNG mit der Authentifizierungserfolgsnachricht zu empfangen,
wobei der neue Schlüssel für das Verschlüsseln von Daten vorgesehen ist, die durch die UE übertragen werden.

10. System nach Anspruch 9, wobei die UE ferner dafür konfiguriert ist, bevor das BNG mit dem AAA interagiert und die Abrechnung auf der UE durch die AAA-Proxy-Funktion des AC umsetzt, eine Adressanfragenachricht an das BNG zu senden und eine vom BNG zugewiesene und zurückgegebene IP-Adresse zu empfangen, und
das BNG ferner dafür konfiguriert ist, nach dem Empfang der Adressanfragenachricht von der UE die IP-Adresse für die UE zuzuweisen und die zugewiesene IP-Adresse an die UE zurückzugeben.

11. System nach Anspruch 10, wobei das BNG (71) ferner dafür konfiguriert ist, vor dem Zuweisen der IP-Adresse für die UE gemäß einer Benutzeridentität in der Adressanfragenachricht zu bestimmen, ob die UE die Authentifizierung besteht, und der UE die IP-Adresse zuzuweisen, wenn bestimmt wird, dass die UE die Authentifizierung besteht.

12. System nach einem der Ansprüche 9 bis 11, wobei das BNG ferner dafür konfiguriert ist, während der Abrechnung gesammelte Abrechnungsinformationen der UE basierend auf dem AAA-Protokoll an den AC zu melden,
wobei der AC (72) ferner dafür konfiguriert ist, nach dem Empfang der Abrechnungsinformationen der UE, die durch das BNG gemeldet werden, als ein AAA-Proxy zu dienen und die empfangenen Abrechnungsinformationen der UE basierend auf dem AAA-Protokoll an den AAA weiterzuleiten, und
der AAA (73) ferner dafür konfiguriert ist, nach dem Empfang der Abrechnungsinformationen der UE, die von dem AC weitergeleitet wurden, eine abrechnungsbezogene Statistik gemäß den empfangenen Abrechnungsinformationen der UE zu erstellen,
wobei der AC (72) ferner dafür konfiguriert ist, eine Benutzerstrategie gemäß den empfangenen Abrechnungsinformationen der UE zu erstellen, wenn die Benutzerstrategie erstellt werden muss, und die Benutzerstrategie an den AP zwecks Ausführung zu senden.

13. System nach einem der Ansprüche 9 bis 11, wobei der AC ferner dafür konfiguriert ist, eine Benutzer-Offline-Mitteilungsnachricht an das BNG zu senden, wenn die Abrechnung beendet werden muss, und nach dem Empfang einer Abrechnungsbeendigungsnachricht von dem BNG als ein AAA-Proxy zu dienen und die Abrechnungsbeendigungsnachricht basierend auf dem AAA-Protokoll an den AAA weiterzuleiten,
wobei das BNG (71) ferner dafür konfiguriert ist, nach dem Empfang der Benutzer-Offline-Mitteilungsnachricht von dem AC die Abrechnungsbeendigungsnachricht basierend auf dem AAA-Protokoll an den AC zu senden, und
der AAA (73) ferner dafür konfiguriert ist, nach dem Empfang der Abrechnungsbeendigungsnachricht die Abrechnung auf der UE zu beenden.

## Revendications

1. Procédé de mise en oeuvre d'authentification et de comptabilité en interaction entre un réseau local sans fil, WLAN, et un réseau fixe, le procédé comprenant l'étape ci-dessous consistant à :
après qu'un équipement utilisateur, UE, accède à un réseau, mettre en oeuvre (101), par le biais d'une passerelle de réseau à large bande, BNG, une interaction avec un serveur d'authentification, d'autorisation et de comptabilité, AAA, et mettre en oeuvre (102) tour à tour une authentification et une comptabilité sur l'équipement UE, à travers une fonction mandataire AAA d'un contrôleur d'accès, AC ;
dans lequel l'étape de mise en oeuvre de l'interaction entre la passerelle BNG et le serveur AAA, et de mise en oeuvre de l'authentification sur l'équipement UE à travers la fonction mandataire AAA du contrôleur AC, comprend les étapes ci-dessous consistant à :
envoyer, par le biais de la passerelle BNG, un message de demande d'authentification reçu en provenance de l'équipement UE, au contrôleur AC, sur la base d'un protocole AAA ;
envoyer, par le biais du contrôleur AC, le message de demande d'authentification, au serveur AAA, sur la base du protocole AAA, après que le contrôleur AC a reçu le message de demande d'authentification ; et
authentifier, par le biais du serveur AAA, l'équipement UE, selon le message de demande d'authentification ;
le procédé comprenant en outre, dès lors que l'authentification a réussi, les étapes ci-dessous consistant à :
retourner, par le biais du serveur AAA, un message de réussite d'authentification, au contrôleur AC, sur la base du protocole AAA ;
envoyer, par le biais du contrôleur AC, à un point d'accès, AP, une clé de l'équipement UE, qui est contenue dans le message de réussite d'authentification reçu et qui est utilisée en vue d'informer le point AP de la réussite de l'authentification sur l'équipement UE, et retourner, par le biais du contrôleur AC, un message de réussite d'authentification, à la passerelle BNG, sur la base du protocole AAA ;
négocier, par le biais du point AP, une nouvelle clé, auprès de l'équipement UE, suite à la réception de la clé de l'équipement UE ; et
stocker, par le biais de la passerelle BNG, des informations utilisateur de l'équipement UE, suite à la réception du message de réussite d'authentification ; et
retourner, par le biais de la passerelle BNG, un message de réussite d'authentification, à l'équipement UE ;
dans lequel la nouvelle clé est destinée à chiffrer des données transmises par l'équipement UE.

2. Procédé selon la revendication 1, dans lequel l'étape d'envoi, par le biais du contrôleur AC, au point AP, de la clé de l'équipement UE, contenue dans le message de réussite d'authentification reçu et utilisée en vue d'informer le point AP de la réussite de l'authentification sur l'équipement UE, comprend l'étape ci-dessous consistant à :
envoyer, par le biais du contrôleur AC, la clé de l'équipement UE, contenue dans le message de réussite d'authentification reçu et utilisée en vue d'informer le point AP de la réussite de l'authentification sur l'équipement UE, au point AP, à travers un tunnel de protocole de commande et de mise en service de points d'accès sans fil, CAPWAP, établi entre le contrôleur AC et le point AP.

3. Procédé selon l'une quelconque des revendications 1 et 2, dans lequel l'étape de mise en oeuvre, par le biais de la passerelle BNG, d'une interaction avec le serveur AAA, et de mise en oeuvre d'une comptabilité sur l'équipement UE à travers la fonction mandataire AAA du contrôleur AC, comprend les étapes ci-dessous consistant à :
envoyer, par le biais de la passerelle BNG, un message de début de comptabilité, au contrôleur AC, sur la base d'un protocole AAA, suite à l'attribution d'une adresse de protocole Internet, IP, pour l'équipement UE ;
transférer, par le biais du contrôleur AC, en tant que serveur mandataire AAA, le message de début de comptabilité, au serveur AAA, sur la base du protocole AAA, suite à la réception du message de début de comptabilité ; et
mettre en oeuvre, par le biais du serveur AAA, une comptabilité sur l'équipement UE suite à la réception du message de début de comptabilité.

4. Procédé selon la revendication 3, le procédé comprenant en outre, au cours de la comptabilité, les étapes ci-dessous consistant à :
rendre compte, par le biais de la passerelle BNG, d'informations de comptabilité de l'équipement UE, collectées par la passerelle BNG, au contrôleur AC, sur la base du protocole AAA ;
transférer, par le biais du contrôleur AC, en tant que serveur mandataire AAA, les informations de comptabilité reçues de l'équipement UE, au serveur AAA, sur la base du protocole AAA ; et
réaliser, par le biais du serveur AAA, des statistiques connexes à la comptabilité, selon les informations de comptabilité reçues de l'équipement UE ;
le procédé comprenant en outre, dès lors que le contrôleur AC a reçu les informations de comptabilité de l'équipement UE, l'étape ci-dessous consistant à :
réaliser, par le biais du contrôleur AC, une politique utilisateur, selon les informations de comptabilité de l'équipement UE, lorsque la politique utilisateur doit être réalisée, et envoyer la politique utilisateur au point AP, à des fins d'exécution.

5. Procédé selon la revendication 4, dans lequel les informations de comptabilité comprennent des informations de trafic de l'équipement UE, et comprennent en outre des informations de durée de l'équipement UE.

6. Procédé selon la revendication 4, dans lequel l'étape d'envoi de la politique utilisateur au point AP à des fins d'exécution, comprend l'étape ci-dessous consistant à :
envoyer, par le biais du contrôleur AC, la politique utilisateur, au point AP, à travers un tunnel de protocole CAPWAP établi entre le contrôleur AC et le point AP, à des fins d'exécution.

7. Procédé selon la revendication 3, comprenant en outre les étapes ci-dessous consistant à :
envoyer, par le biais du contrôleur AC, un message de notification d'état hors ligne de l'utilisateur, à la passerelle BNG, lorsque la comptabilité doit être interrompue ;
envoyer, par le biais de la passerelle BNG, un message de fin de comptabilité, au contrôleur AC, sur la base du protocole AAA, suite à la réception du message de notification d'état hors ligne de l'utilisateur ;
transférer, par le biais du contrôleur AC, en tant que serveur mandataire AAA, le message de fin de comptabilité, au serveur AAA, sur la base du protocole AAA, suite à la réception du message de fin de comptabilité ; et
mettre fin, par le biais du serveur AAA, à la comptabilité sur l'équipement UE, suite à la réception du message de fin de comptabilité.

8. Procédé selon la revendication 7, dans lequel la comptabilité doit être interrompue lorsqu'une notification d'état hors ligne concernant l'équipement UE est reçue, ou lorsque l'équipement UE est détecté comme se déconnectant, ou lorsque l'équipement UE est détecté comme satisfaisant un état hors ligne ;
dans lequel l'étape consistant à détecter que l'équipement UE satisfait l'état hors ligne comprend l'étape ci-dessous consistant à :
détecter que des données connexes au trafic et/ou à la durée utilisés par l'équipement UE ont atteint une limite supérieure souscrite par l'équipement UE.

9. Système destiné à mettre en oeuvre une authentification et une comptabilité en interaction entre un réseau local sans fil, WLAN, et un réseau fixe, comprenant une passerelle de réseau à large bande, BNG (71), un contrôleur d'accès, AC, (72), et un serveur d'authentification, d'autorisation et de comptabilité, AAA (73) ; dans lequel :
la passerelle BNG (71) est configurée de manière à interagir avec le serveur AAA (73) et à mettre en oeuvre tour à tour l'authentification et la comptabilité sur un équipement utilisateur, UE, à travers une fonction mandataire AAA du contrôleur AC après que l'équipement UE accède à un réseau ;
comprenant en outre un point d'accès, AP, et l'équipement UE ; dans lequel,
le serveur AAA (73) est configuré de manière à, suite à la réussite de l'authentification, retourner un message de réussite d'authentification, au contrôleur AC, sur la base d'un protocole AAA ;
le contrôleur AC (72) est configuré de manière à, suite à la réception du message de réussite d'authentification retourné par le serveur AAA, envoyer, au point AP, une clé de l'équipement UE contenue dans le message de réussite d'authentification reçu et utilisée en vue d'informer le point AP de la réussite de l'authentification sur l'équipement UE, et retourner un message de réussite d'authentification, à la passerelle BNG, sur la base du protocole AAA ;
le point AP est configuré de manière à, suite à la réception, en provenance du contrôleur AC, de la clé de l'équipement UE qui est utilisée en vue d'informer le point AP de la réussite de l'authentification sur l'équipement UE, négocier une nouvelle clé auprès de l'équipement UE ;
la passerelle BNG (71) est en outre configurée de manière à, suite à la réception du message de réussite d'authentification retourné par le contrôleur AC, stocker des informations utilisateur de l'équipement UE, et retourner un message de réussite d'authentification à l'équipement UE ; et
l'équipement UE est configuré de manière à négocier la nouvelle clé auprès du point AP, et à recevoir le message de réussite d'authentification retourné par la passerelle BNG ;
dans lequel la nouvelle clé est destinée à chiffrer des données transmises par l'équipement UE.

10. Système selon la revendication 9, dans lequel, avant que la passerelle BNG n'interagisse avec le serveur AAA et ne mette en oeuvre la comptabilité sur l'équipement UE à travers la fonction mandataire AAA du contrôleur AC, l'équipement UE est en outre configuré de manière à envoyer un message de demande d'adresse, à la passerelle BNG, et à recevoir une adresse IP attribuée et retournée par la passerelle BNG ; et
la passerelle BNG est en outre configurée de manière à, suite à la réception du message de demande d'adresse en provenance de l'équipement UE, attribuer l'adresse IP pour l'équipement UE et renvoyer l'adresse IP attribuée à l'équipement UE.

11. Système selon la revendication 10, dans lequel, avant d'attribuer l'adresse IP pour l'équipement UE, la passerelle BNG (71) est en outre configurée de manière à déterminer si l'équipement UE réussit l'authentification, selon une identité d'utilisateur dans le message de demande d'adresse, et à attribuer l'adresse IP à l'équipement UE lorsqu'il est déterminé que l'équipement UE a réussi l'authentification.

12. Système selon l'une quelconque des revendications 9 à 11, dans lequel, au cours de la comptabilité, la passerelle BNG est en outre configurée de manière à rendre compte d'informations de comptabilité collectées de l'équipement UE, au contrôleur AC, sur la base du protocole AAA ;
le contrôleur AC (72) est en outre configuré de manière à, suite à la réception des informations de comptabilité de l'équipement UE signalées par la passerelle BNG, servir de serveur mandataire AAA, et transférer les informations de comptabilité reçues de l'équipement UE, au serveur AAA, selon le protocole AAA ; et
le serveur AAA (73) est en outre configuré de manière à, suite à la réception des informations de comptabilité de l'équipement UE transférées par le contrôleur AC, réaliser des statistiques connexes à la comptabilité, selon les informations de comptabilité reçues de l'équipement UE ;
dans lequel le contrôleur AC (72) est en outre configuré de manière à réaliser une politique utilisateur selon les informations de comptabilité de l'équipement UE, lorsque la politique utilisateur doit être réalisée, et à envoyer la politique utilisateur, au point AP, à des fins d'exécution.

13. Système selon l'une quelconque des revendications 9 à 11, dans lequel le contrôleur AC est en outre configuré de manière à envoyer un message de notification d'état hors ligne de l'utilisateur, à la passerelle BNG, lorsque la comptabilité doit être interrompue, et suite à la réception d'un message de fin de comptabilité en provenance de la passerelle BNG, à servir de serveur mandataire AAA, et à transférer le message de fin de comptabilité, au serveur AAA, sur la base du protocole AAA ;
la passerelle BNG (71) est en outre configurée de manière à, suite à la réception du message de notification d'état hors ligne de l'utilisateur en provenance du contrôleur AC, envoyer le message de fin de comptabilité, au contrôleur AC, sur la base du protocole AAA ; et
le serveur AAA (73) est en outre configuré de manière à, suite à la réception du message de fin de comptabilité transféré par le contrôleur AC, mettre fin à la comptabilité sur l'équipement UE.
